# EUROPEAN PATENT SPECIFICATION

(11) **EP 0 483 279 B1**
(45) Date of publication and mention of the grant of the patent: **10.04.1996**
(21) Application number: 90912290.5
(22) Date of filing: 20.07.1990
(51) Int. Cl.: H04N 1/41

(54) **SYSTEM FOR REPRESENTING SAMPLED IMAGES**
SYSTEM ZUR DARSTELLUNG ABGETASTETER BILDER
SYSTEME DE REPRESENTATION D'IMAGES ECHANTILLONNEES

(30) Priority: 21.07.1989 US 383400
(43) Date of publication of application: 06.05.1992
(73) Proprietor: GRAPHIC EDGE, Amherst, NH 03031 (US)
(72) Inventor: BLANNIN, Alan, Amherst, NH 03031 (US); BJORGE, Per, H., Hollis, NH 03049 (US); DEUTSCH, Keith, R., Amherst, NH 03031 (US)
(74) Representative: Orchard, Oliver John
(86) International application number: US9004101
(87) International publication number: WO9101609

(56) References cited:
- EP-A- 0 163 898
- EP-A- 0 220 706
- FR-A- 2 559 979
- US-A- 3 215 773

## Description

### FIELD OF THE INVENTION

This invention relates generally to computer graphics, and particularly to a technique for representing sampled images.

### BACKGROUND OF THE INVENTION

Computer-readable representations of real-world source images are generated in a number of different ways, such as by using a scanner or digital camera. These devices optically scan the image and produce a sampled video signal. Each sample of the video signal is a digital value, called a pixel value, which corresponds to the light intensity, or some colorimetric property, of a particular elemental area, or pixel, of the real image. The sampled video signal is typically read by a computer, which organizes the pixel values into a two-dimensional array called a pixel map. Each pixel value in the pixel map thus represents the intensity of a corresponding pixel of the real image. The array memory location at which a pixel value is stored is determined by the spatial position of its corresponding pixel in the source image.

The resolution of the resulting computer-readable image representation depends upon the number of pixel map entries, as well as the number of different levels used in digitizing the sampled video signal. For example, even if a fairly small 3 by 5 inch photograph is scanned at what is considered to be a medium resolution of 300 pixels per inch, the pixel map is 900 by 1500, or 1.35 million pixel values. If each sample of the video signal is digitized to one of 256 possible levels, requiring eight bits per pixel, the pixel map occupies 1.35 megabytes of memory.

While a data file of that size is not unmanageable with present-day computer technology, it is too large for most applications, which typically require the storage and handling of a number of images. It is clear, therefore, that a more efficient mechanism for handling scanned images is desirable.

It is also desirable to provide a mechanism whereby an image sampled at one resolution can be subjected to various manipulations, and then be displayed or printed at a different resolution. When this is possible, an image can be rendered on output devices having different resolutions, regardless of the resolution of the original pixel map. Pixel map representations are usually not easily processed in this manner, since only a discrete number of samples of the source image are available.

In other words, sampled images should be represented in a condensed form, and yet be readily amenable to scaling, rotating, clipping, windowing, and other manipulations which are commonly performed on synthetic computer-generated images.

Certain images, such as type fonts, can already be represented in raster-image processable form. Such font images are typically susceptible to specification by a human as analytic descriptions of the outlines of each character. The analytic descriptions can be a series of lines, arcs, or other graphic primitive elements. Then, when a character needs to be rendered, the analytic expression can be easily subjected to the desired graphic manipulations.

Others have proposed various ways to model a graphic object, given an analytic description of the image as an input. Such models are usually in the form of a linked list with pointers to successively smaller portions of the object. A computer builds the model by evaluating the analytic expression for one portion of the image at a time. For example, if the object is a sphere, a mathematical representation for the sphere is evaluated in a number of particular spatial ranges, to determine how each portion can be more simply described, say, as a line segment. In order to render the sphere, the linked list is then traversed by evaluating each line segment.

However, conventional wisdom has been that such hierarchal representations cannot easily be derived for sampled images, since there is no pre-existing, human-specified analytic description of the image . And even if such a description can be derived, it is also thought that the overhead of the hierarchal model will be far too large to justify its use.

EP-A-0 220 706 discloses a coding method which models a pixel block as a curved surface.

### SUMMARY OF THE INVENTION

In brief summary, we develop an analytic model of an image by operating directly upon the pixel map representation output from an image sampling device, such as a scanner. The analytic model is encoded in a hierarchical data structure, with each element in the hierarchy being either an analytic expression for a portion of the image, or a set of pointers to locations of elements at the next lower level of the structure. Failing an analytic expression for a sub-area of the image at the lowest level, a condensed representation of the pixel map is used at that level.

In order to generate the model, the pixel values in the pixel map are first arranged into a set of pixel groups, each of which relates to a sub-area of the image. Each group of pixel values is analyzed to determine how a corresponding subarea, or "tile", of the source image is to be represented. A number of operations are performed during this analysis.

Specifically, the operations performed and their order of performance correspond to the way in which a human eye and brain perceive an image. In particular, a human eye is normally most sensitive to intensity boundaries, or places in the image where there are sharp demarcations in the intensity, such as at the "edge" of an object. The model thus stores as much information as needed to represent such edges to a desired level of accuracy. The human eye also typically "averages" areas of small intensity difference. Accordingly, relatively little information is stored for those tiles.

Thus, if the pixel values associated with a tile gradually and monotonically change in magnitude, they can be represented mathematically as a three-dimensional, planar sloped surface that relates the magnitude of each pixel value to its relative position. The gradient of the planar surface can be determined simply from the pixel values at its vertices. Only one vertex value for each tile needs to be stored in the model, since the other vertex values can be determined by examining vertex values associated with adjacent tiles.

However, if a pixel value boundary, or edge, passes through the tile, an analytic expression for the path of the edge is derived. In order to determine the best such expression, one or more histograms are made of the pixel values in a tile to determine if they fall mostly into one or more groups having approximately the same magnitude. A "posterized" version of the tile is then produced by hard-limiting the value of each pixel to one or more threshold values. The edges in such a posterized tile are thereby delineated in sharp contrast. An edge traversal and successive area approximation technique is then used to derive a close analytical approximation of the edges such as in terms of line segments, parabolic arcs, or other primitive descriptors.

If neither the slope expression nor the edge expression is sufficiently accurate, the tile is sub-divided and the sub-tile pieces are examined to determine if they can be represented as slope expressions. The tile can be further sub-divided and examined in this manner until a predetermined maximum number of subdivisions has been tried.

If, after the maximum number of sub-divisions has been tried, the analytical representation is still not sufficiently accurate, the tile is stored as a list of pixel values.

Finally, the resulting analytic expressions for the tiles are linked in a hierarchical data structure called a quadtree. The maximum number of levels in the quadtree is fixed so that above a certain level the data structure is a simple array. Each element at the top of the hierarchy, called a "supertile", contains pointers to a number of tiles. Each supertile also contains any boundary information needed to render the tiles which it encompasses, such as the pixel values from adjacent tiles along the supertile boundary.

In the process of creating the quadtree, if four adjacent tiles are sufficiently similar, they are merged. For example, if four adjacent tiles are found to specify the same sloped expression, and their slope features align with each other, they are merged into a single mathematical expression which is stored at the next highest level of the data structure. The merging process continues iteratively through successively higher levels of the quadtree, until a level is reached were no further merging is possible.

There are a number of advantages to this approach. In most instances, the invention results in a material reduction in the amount of data required to represent a given image.

Also, the image representation is free of restrictions originating from the source sampling device or the output device. Thus, the image can not only be rendered at one resolution and output to a laser printer for proof copy, but may also be subjected to a more rigorous half-tone rendering, such as used with a raster-based typesetter, for final printed copy.

In addition, because the image representation comprises a set of analytic expressions, images from several different sources with different resolutions can be combined and rendered with the same output resolution.

Furthermore, because an analytic expression is derived for each sub-area of the image, the resulting representation can be quite efficiently subjected to common graphic manipulations such as scaling, rotation, clipping, etc., as is done for computer-generated art and surface models. The model can thus be treated as a synthetically-derived image. In other words, it need not be rendered, and output parameters need not be associated with it, until a request for presentation is made.

Certain image processing techniques are also more efficiently applied, since the representation is a highly condensed form of the image, and because the representaiton directly provides certain necessary information concerning the source image, including the location of pixel value boundaries.

An additional advantage is the improved rendering of half-tone images, since the half-tone dots can be formed in a manner more closely reflecting the detailed structure of the image. Clearer, sharper images result, even at low half-tone densities, since the precise locations of pixel-value boundaries are stored in the hierarchical model.

The hierarchical data structure retains the principle advantage of a quadtree, namely conservation of relative locality, while providing a way to rapidly distinguish sections of the image which are inside a particular spatial boundary, or window. This also makes the image representation amenable to parallel processing.

Reference is also made to the appended claims 1-12.

### BRIEF DESCRIPTION OF THE DRAWINGS

The above and further advantages of the invention may be better understood by referring to the following description in conjunction with the accompanying drawings, in which:
FIG. 1 is a hardware system block diagram of a computer imaging system that generates and makes use of an image representation according to the invention;
FIG. 2 is a software system block diagram of the imaging system;
FIGS. 3A through 3C are diagrams showing how a hierarchical data structure is used to represent an image as a group of analytic expressions, with each expression associated with an elemental area of the image, called a tile;
FIGS. 4A through 4E are flow charts of the steps performed by the system to encode a source image;
FIGS. 5A through 5C explain the spatial orientation of the types of analytic expression used for sloped tiles in a preferred embodiment;
FIGS. 6A through 6C are exemplary pixel data used to explain how a specific sloped tile is encoded;
FIGS. 7A through 7C are exemplary pixel data used to explain how a particular edge tile is encoded; and
FIG. 8 depicts how a particular supertile is encoded in a hierarchical data structure.

### DETAILED DESCRIPTION OF ILLUSTRATIVE EMBODIMENTS

The following discussion includes a description of (1) the general architecture of a computer imaging system used to store and manipulate images in analytic form according to the invention; (2) the hierarchical data structure into which the analytic expressions are fit; and (3) how the analytic expression for each tile, or sub-area of an image, is derived. The discussion is augmented by several illustrations showing how specific pixel data is encoded in various ways.

### (1) GENERAL SYSTEM ARCHITECTURE

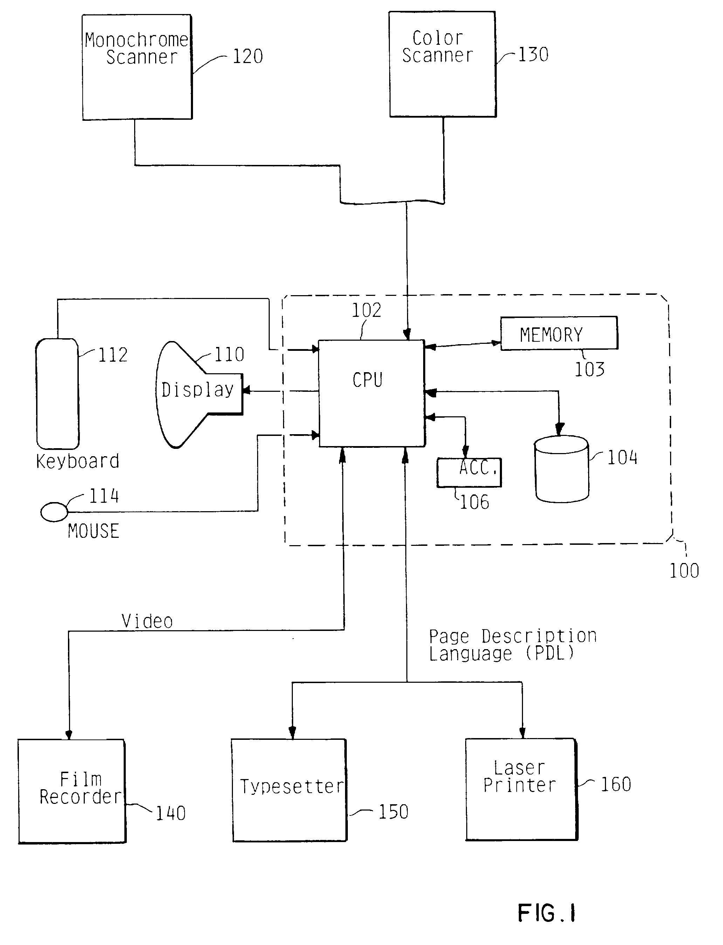

FIG. 1 is a hardware block diagram of an exemplary computer imaging system 100 including a central processing unit (CPU) 102, an associated memory 103, and a mass storage device 104. Given the stringent processing time requirements in many image processing applications, the system may also use a processor accelerator 106. Peripheral equipment associated with the system 100 includes input devices such as a keyboard 112, a mouse 114, a monochrome scanner 120, and a color scanner 130; as well as output devices such as a video display 110, a film recorder 140, a typesetter 150, and a laser printer 160. The imaging system 100 and peripherals are of conventional construction and are known in the art. For example, the CPU 102 may be an International Business Machines (IBM) Personal Computer, or other computer adapted to perform the functions described below.

A source image, typically originating in the form of a document or photograph, is fed into one of the scanners 120 or 130, which in turn produces a pixel map representation of the image as an array of pixel values. In the case of monochrome scanner 120, each pixel value typically indicates the light intensity, or grey level, of a particular elemental area, or pixel, of the image. In the case of color scanner 130, each pixel value typically indicates one or more colorimetric properties of the elemental area, such as the intensity of several primary colors. The primary colors may include red, green, and blue (RGB) or cyan, yellow, magenta, and black (CYMB). Other non-primary colorimetric encodings such as hue, saturation and value (HSV) may also be used. Thus, while in the implementation of the invention described herein, pixel values are described as representing the light intensity of a monochrome image output by monochrome scanner 120, it should also be understood that the invention is not limited to any particular pixel encoding scheme.

The pixel values generated by the monochrome scanner 120 are organized into a two-dimensional array, or pixel map, by CPU 102. In this instance, each value in the pixel map represents the monochromatic intensity of a corresponding pixel in the source image, as previously described, with the array coordinates of a particular pixel specifying the spatial position of the corresponding pixel in the source image. The pixel map is stored in the storage device 104 or the memory 103.

In accordance with the invention, the CPU 102 then operates on the pixel map representation to produce one or more analytic expressions for the image. The analytic expressions are stored in a hierarchical data structure in the memory 103 or the storage device 104.

As will be described shortly, the analytic expressions are free of any restriction or specification dependent upon the spatial or tonal resolution of the scanner 120. When it is time to display the image on one of the output devices 140, 150, or 160, the CPU 102 performs the necessary calculations to interpret the series of analytic expressions at the resolution of the specific output device. This is done, for example, by generating a description of the image in a suitable Page Description Language (PDL) which includes the desired pixel map representation of the portion or portions of the image which are to be displayed.

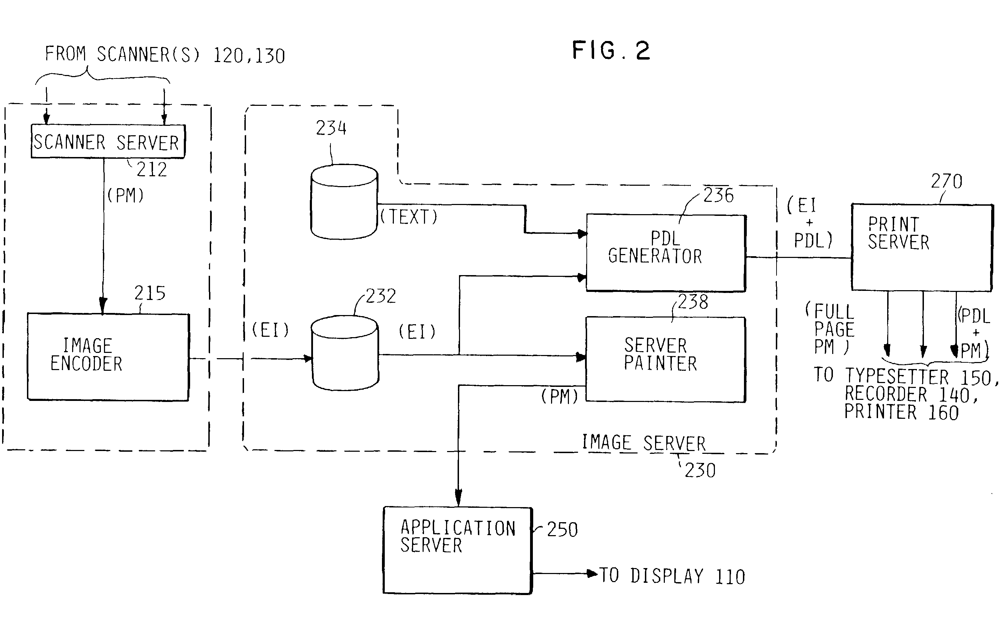

The image is not only stored in a compact analytic form, but may also be rendered at a resolution which is apparaently higher than the resolution of the scanner 120. To appreciate how this is accomplished, consider the system software block diagram of FIG. 2. Source image data are acquired by a scanner server 212 which serves as an interface to the scanners 120 and 130. The scanner server 212 produces a pixel map (PM) representation at the resolution of the scanner, and passes the pixel map PM to an image encoder 215. Encoder 215 performs several operations, as will be described shortly, to generate a device and resolution-independent encoded image EI (EI). The encoded image (EI) is then stored in an image store area 232, and the original pixel map (PM) can then be discarded. (Image store area 232 may be part of memory 103 or storage device 104). Note that another store area 234 may contain other information, such as text, which is to be combined with the encoded image (EI).

When the image is to be regenerated by an output device, such as display 110 (FIG. 1), the encoded image EI is fed to a server painter 238. The server painter 238 evaluates the analytic expressions in the encoded image EI, given information such as the desired output resolution, and renders a new pixel map (NPM) at the desired output resolution. The new pixel map (NPM) is forwarded to an application server 250 which then causes the image to appear on the display 110. Operating in conventional fashion, server painter 238 may also subject the encoded image to various graphic manipulations, such as scaling, rotating and clipping, or image processing algorithms, before the new pixel map (NPM) is rendered.

Other output devices may require a PDL generator 236 to first combine the encoded image (EI) and text into a Page Description Language (PDL) representation. The PDL representation is then fed to a print server 270 together with the encoded image (EI). Print server 270 in turn evaluates the encoded image (EI) and feeds the combined image and text to output devices such as typesetter 150, film recorder 140 or laser printer 160. Certain of these output devices may require a full page pixel map of both rendered text and image. Other devices may directly interpret the PDL description, requiring only the image in pixel map form.

### (2) THE QUADTREE/TILE DATA STRUCTURE

The encoded image (EI) from the image encoder 215 is in the form of a data structure consisting of a two dimensional array of elements called "supertiles". Each supertile is a self-contained unit which fully describes the content of an area of the source image, including all boundary informatibn needed by the server painter 238 or print server 270 to render the corresponding area of the source image. Each supertile typically encompasses several "tiles", each of which represents a corresponding sub-area of the source image. The tiles associated with a particular supertile are arranged in a hierarchical data structure such as a quadtree.

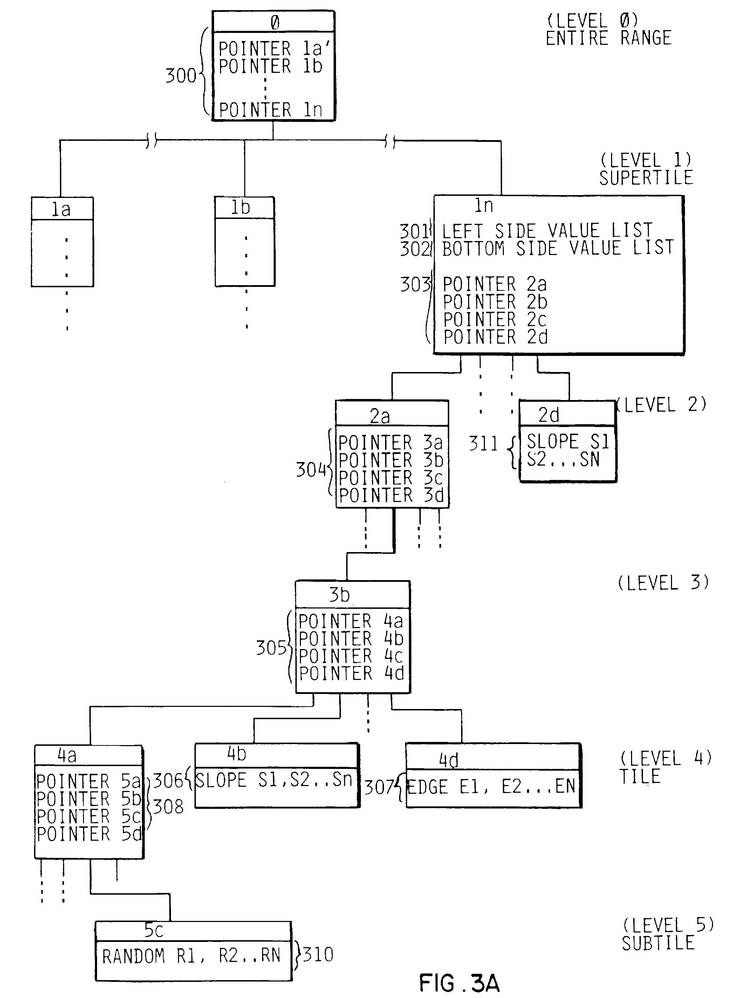

FIG. 3A illustrates the data structure more particularly. It is a simple, or "flat" array at the highest level, but hierarchical at lower levels. In the illustrated example it has five (5) levels, with the level number of a particular element of the data structure appearing at the top of its description for reference. For clarity, only a partially complete data structure is shown. An actual encoded image has many more elements at the lowest level, i.e. at level 5 in the example. The exact number of levels used at a particular place in the data structure depends upon the nature of the source image data, as will be explained shortly. The hierarchy is preferably a quadtree, so that each of the elements at levels below level 1 represents a corresponding sub-area of the image, and so that each element contains at most four pointers.

The level 0 element contains a list of pointers 300 to the locations of the elements at level 1, namely elements 1a, 1b, ..., 1n. Each of the elements at level 1 is a supertile. An exemplary supertile, element 1n, includes a list of pointers 303 that specify the locations of four elements 2a, 2b, 2c, and 2d of the data structure at the next lower level, level 2. These elements further describe how the area of the source image associated with supertile 1n is to be rendered. Preferably, the supertile 1n also includes certain boundary information needed to render it, such as a list of left side inheritance values 301 and bottom inheritance values 302, which are pixel values taken from the supertiles immediately to the left and below the current supertile, respectively. The origin and use of these inheritance values is described in detail later.

In the illustrated example, element 2a at level 2 contains a description of how a sub-area corresponding to one quadrant of supertile 1n is rendered. Element 2a thus consists of a list of pointers 304 to four elements at the next lower level, level 3. However, another element 2d at level 2 contains a representation of a specific analytic expression 311 which describes how its corresponding quadrant is rendered. The reason for this difference will become evident as the various types of image expressions we use are described below.

The division of sub-areas into quadrants continues in each branch and at successively lower levels of the quadtree, until an analytic expression is specified for every corresponding sub-area of the source image. For example, an exemplary element 3b at level 3 contains a list 305 of pointers to elements 4a, 4b, 4c, and 4d at level 4.

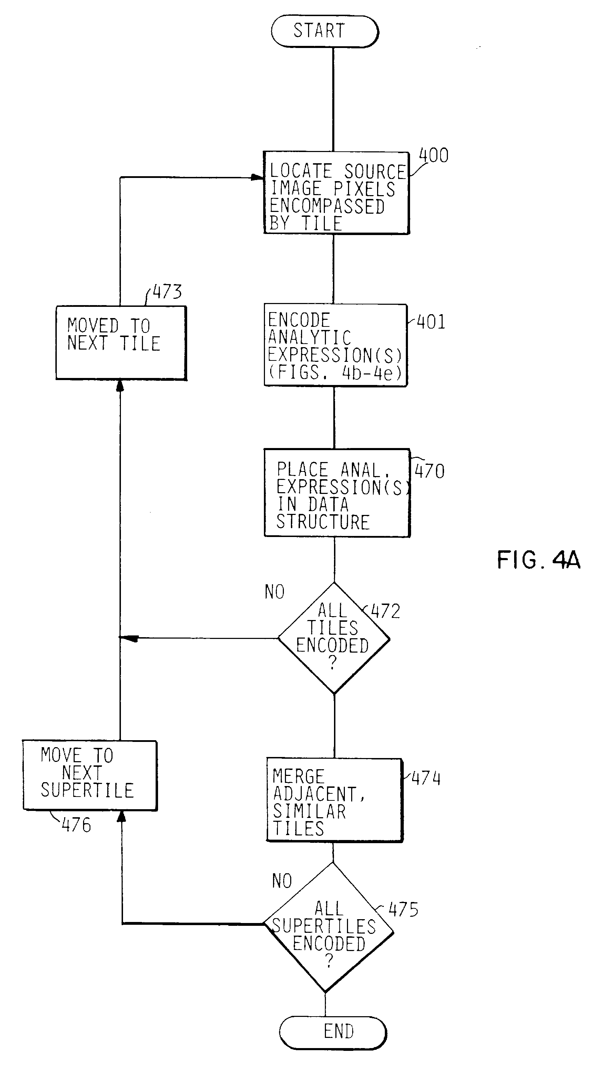

In the illustrated example, level 4 is considered as the "tile" level, or that level where analytic expression are initially derived for corresponding sub-areas of the source image. This process is below in connection with FIGS. 4A through 4E. Thus, exemplary elements 4b, 4c, and 4d contain analytic expression which describe how to render corresponding sub-areas of the source image.

However, if necessary, an additional level 5 of the data structure including elements such as elements 5c is used. Element 5c contains a representation of its corresponding image sub-area as a list of values. This lowest level is only used when an analytic expression cannot be derived for a sub-area at the tile level.

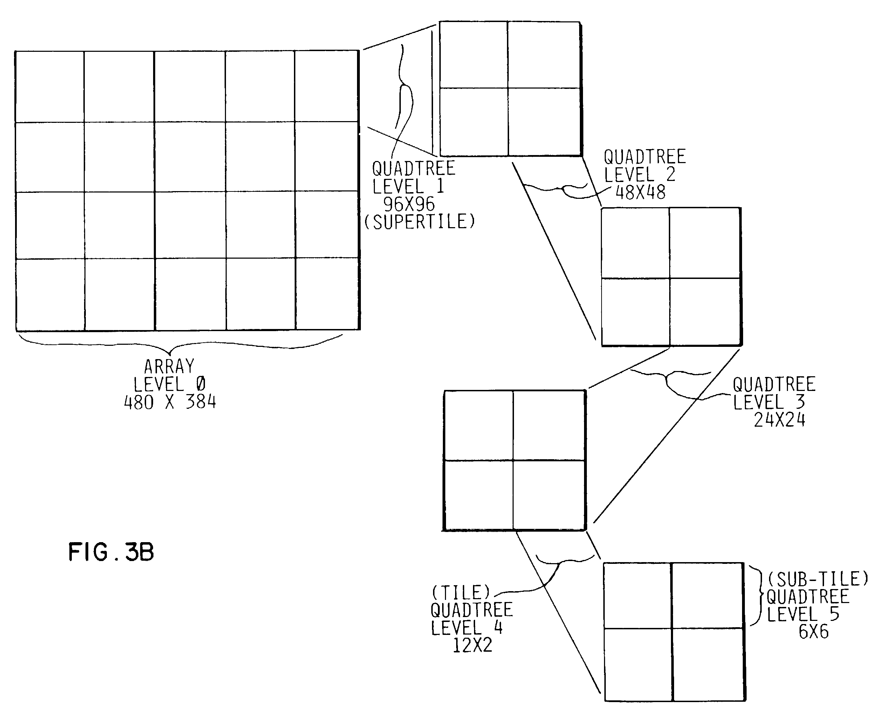

Turning briefly to FIG. 3B, it is seen how the various elements at certain levels in the data structure specify corresponding areas and sub-areas of the source image. In the example shown, the source image encompasses 480 x 384 pixels. The supertile size is chosen to be 96 x 96 pixels, so that at level 0, the encoded image is specified as a 4 x 5 array of supertiles 1a, 1b, ..., 1n.

Each of the tiles encompasses a 12 x 12 set of pixels, at level 4. Thus, the quadtree contains descriptions of four 48 x 48 sub-areas at level 2, sixteen 24 x 24 sub-areas at level 3, sixty-four 12 x 12 sub-areas at level 4, and, if needed, up to two hundred and fifty-six sub-areas at level 5.

The two dimensional array of quadtree supertiles is a unique data structure which solves a significant problem associated with simple quadtree structures. When the sub-area encompassed by each quadtree element is very small and/or there are a very large number of quadtree elements, the overhead of a conventional quadtree structure can become quite large. Using an array above a certain level, i.e., making the data structure "flat", limits the amount of processing overhead required for each tile, while retaining the known advantages of a conventional quadtree. For example, the system 100 can easily identify supertiles positioned at least partially within a clipping boundary, by simply considering their position in the data structure at the array level.

As previously mentioned, the pixel values encompassed by each tile are processed to determine how they may be accurately represented by an analytic expression. The possible analytic expressions are of several types, including slope expressions, as in tile 4b (FIG. 3A), edge expressions, as in tile 4d, and random expressions, as in tile 4a.

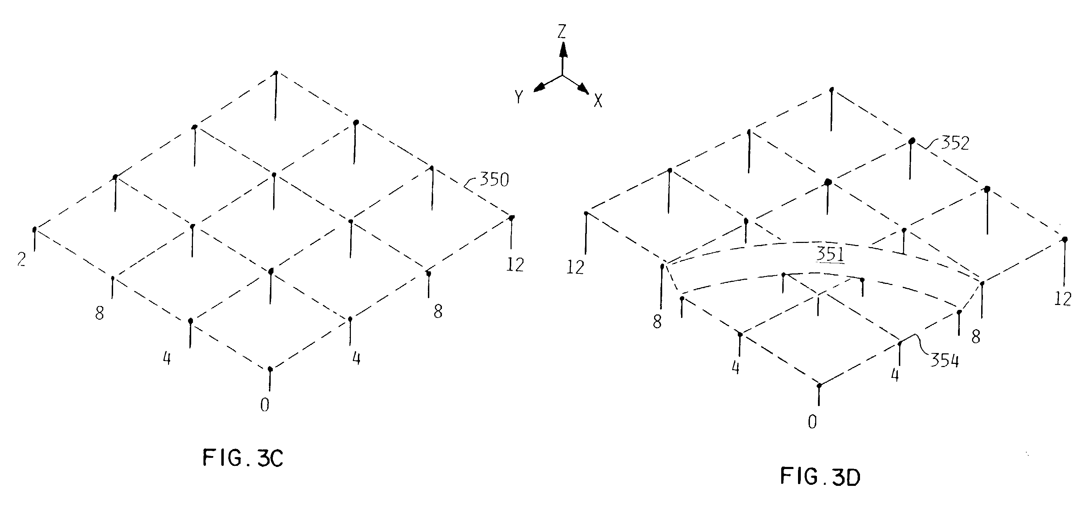

Exemplary pixel data represented as a slope expression are depicted graphically in FIG. 3C. This figure shows a three-dimensional view, with the pixel positions being represented by their (x,y) positions in the tile, and the corresponding pixel values plotted along the z-axis. For clarity, only every fourth pixel value is plotted . The pixel values approximate a surface which is a sloped plane, indicated by the dashed lines 350. Thus, in the simplest form of the invention, a slope tile is a group of pixel values that can be collectively represented as an analytic expression for a plane. However, other slope tile mathematical expressions can be used to describe three-dimensional, continuously sloped surfaces. An element 4b of the data structure (FIG. 3A) which is a slope tile thus includes parameters s1, s2, ..., sn for the analytic expression which represents the particular coordinates and/or gradient of the surface.

Exemplary pixel data represented as an edge tile are depicted in FIG. 3D. Here, a sharp transition , or edge 351, is plainly evident in the pixel values. The resulting surface is thus best represented as two analytic expressions for the surface portions 352 and 354 on either side of the edge 351, together with an expression for the edge 351. Thus, an element 4d of the data structure (FIG. 3A) which is an edge tile includes parameters e1, e2, ..., en which indicate the edge type as well as other information specifying the edge, as will be seen.

The random tile element 4a is used when the corresponding pixel values from the source image cannot be adequately described as a slope or an edge. A tile of this type consists of a subset of the pixel values sampled from predetermined pixels encompassed by the tile.

One advantage of the foregoing approach is a material reduction in the amount of data required to describe a source image. This result is not entirely evident at first glance, since a complex image might in principal require a very dense analytical description. However, in practice we have found that about 90% of most source images can be expressed as slope tiles, and thus a distinct advantage does result.

### (3) IMAGE ENCODING PROCESS

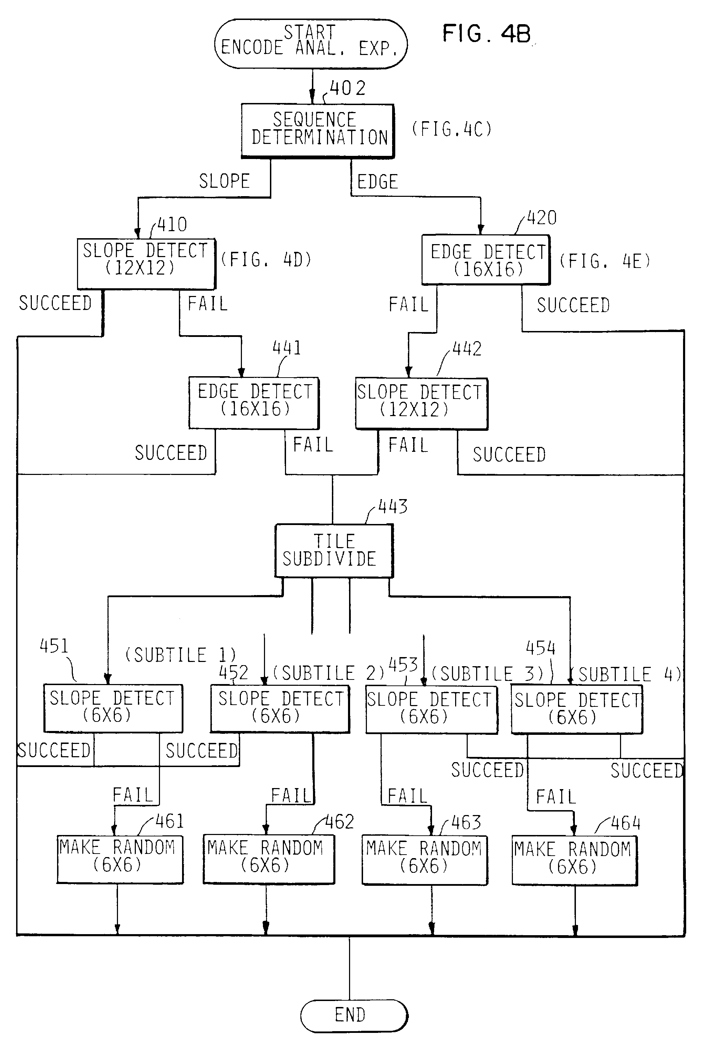

A more detailed description of the process of encoding the image as a hierarchical data structure containing analytic expressions for each sub-area of the image now follows. As previously mentioned, the encoding of an image begins at the tile level (level 4 in FIG. 3A). As shown in FIG. 4A, the first step 400 is to locate the pixel values from the source image associated with a particular starting tile . These pixel values are then analyzed in step 401, as detailed in FIGS. 4B through 4E, to determine how they can be encoded in the form of analytic expressions which represent the pixel values to a desired degree of accuracy. In step 470, a code for these expressions and their parameters are stored in the data structure, in the element of the quadtree hierarchy corresponding to the position of the tile. If all the tiles in the same supertile have not yet been encoded, step 472 passes control to step 473, to cause the next tile in the supertile to be considered.

When all tiles in a supertile have been encoded, then control passes to step 474 where similar adjacent quadtree elements are merged. In particular, after an analytic expression is derived for each tile in a supertile, the quadtree is re-examined. If, for example, four elements at the same level are found to contain sufficiently similar analytic expressions, they are merged into a single expression located at the next higher level of the data structure. The merging process continues iteratively, until the highest level of the quadtree is reached or until adjacent elements are not sufficiently similar.

Finally, in step 475, if all supertiles have not yet been encoded, control passes to step 476 to initiate the encoding process for another supertile.

FIG. 4B shows the process for determining the appropriate analytic expression (step 401 of FIG. 4A) for a tile in detail. This process includes tasks of three general types, namely sequence determination in step 402, slope detection in step 410, and edge detection in step 420.

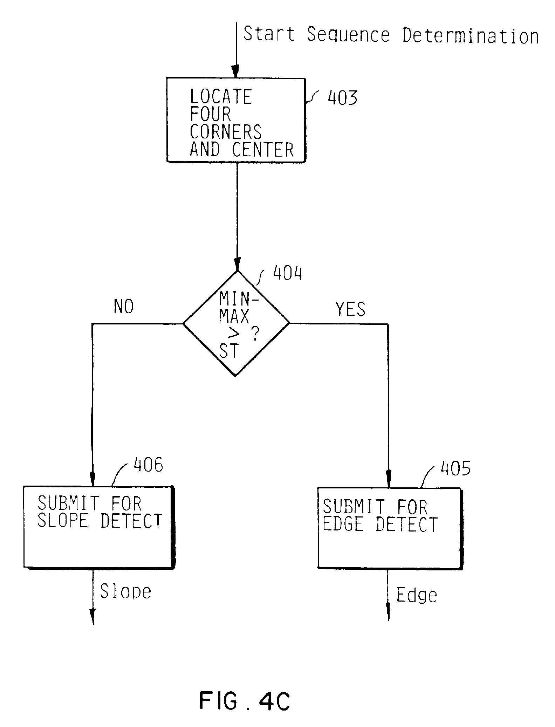

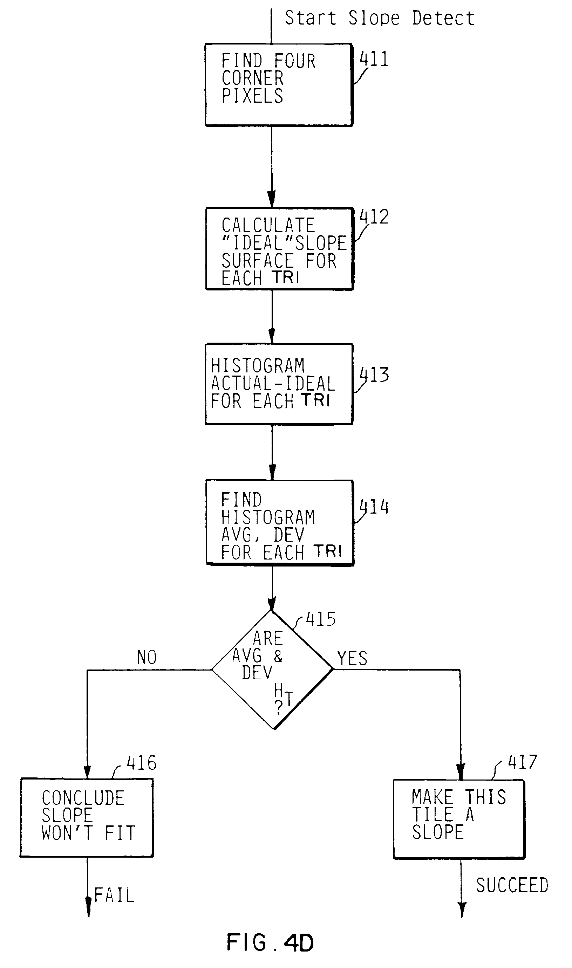

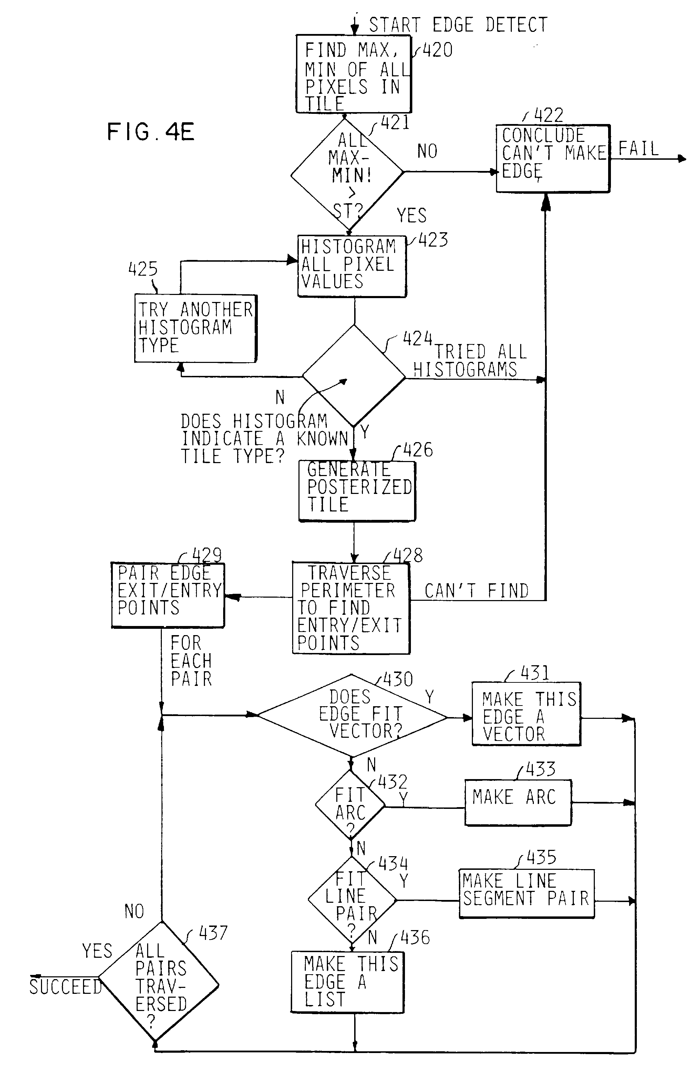

As shown in the flow chart of FIG. 4B, the first step 402 is to perform sequence determination. This process, detailed in FIG. 4C, analyzes a few of the pixels encompassed by the tile to determine if they appear to be best suited for slope detection or edge detection. If the conclusion is that slope detection is more appropriate, the tile is submitted to the slope detection process in step 410. Otherwise, the tile is first submitted to the edge detection process in step 420. Slope detection and edge detection are later described in detail in connection with FIGS. 4D and 4E, respectively.

Continuing with FIG. 4B, if slope detection fails at step 410, the tile is then submitted to the edge detection process, in step 441. Conversely, if edge detection fails at step 420, the tile is then submitted to the slope detection process, in step 442.

If neither edge nor slope detection succeeds, the tile is considered in four sub-tiles, in step 443. In the implementation being discussed, each subtile is 6 x 6 pixels. In steps 451, 452, 453, and 454, the four sub-tiles are each submitted to another slope detection process, which attempts to fit a slope expression to each 6 x 6 subtile.

If the attempt to find an analytic expression fails at this level, the subtile is represented as a random tile, namely, a subset of the pixel values in the corresponding quadrant of the tile, in steps 461, 461, 463, and 464. Fpr the 6 x 6 subtile implementation being discussed, a preferred subset is a set of pixel values positioned equidistant from one another, such as the set of pixel values including the upper-right corner values from each one of four quadrants in the sub-tile.

The sequence determination process of step 402 is illustrated in FIG. 4C. The purpose of this process is to determine whether the tile appears, at a quick glance, to be better represented as a slope or edge expression. This is accomplished by first examining the values of the four corner pixels and the center pixel, in step 403. The difference between the maximum and minimum of these values is calculated, in step 404. If this difference is larger than a threshold value, Sₜ, the tile is first submitted for edge detection, in step 405. If this difference is smaller, the tile is submitted for slope detection, in step 406. The threshold Sₜ is an empirically derived system parameter. Its value depends upon the number of bits used to represent each pixel value, the desired accuracy of the resulting image representation, and the type of image being scanned.

The sequence determination operation of FIG. 4C is performed primarily as a matter of efficiency. It is a simple determination, in most cases will successfully identify slope tiles, and it prevents most slope tiles from first being submitted for edge detection.

FIG. 4D depicts the slope detection process, which determines whether the pixel values from the portion of the source image encompassed by the tile can be represented as a slope expression. To understand this representation, it is helpful to visualize the image as a three-dimensional surface, with the height of the surface given by the value of the underlying pixel, as explained in connection with FIG. 3C.

The slope detection process attempts to closely approximate the surface associated with the tile by representing it as a set of two, equal sized triangles. In the simplest implementation of the invention, each triangle is considered to be a continuously sloped plane, with the gradient of each plane thus specified by the values of its vertices. Thus, a single slope tile actually describes two surfaces containing a common central line. The surfaces may have different gradients.

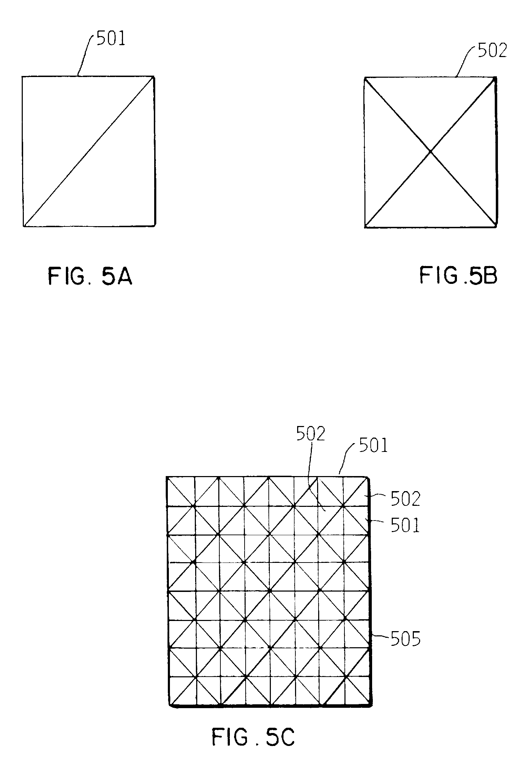

There are two possible ways to split the square area encompassed by a tile into two equal triangles. One such way, using a so-called positive-slope tile 501, divides the tile into an upper-left and lower-right triangle, as depicted in FIG. 5A. The other orientation, a so-called negative-slope tile, is depicted in FIG. 5B. In accordance with our invention, however, only one of the two possible orientations is considered for a given tile, with the selection depending upon the spatial position of the tile within the supertile. FIG. 5C shows the orientations for the 8 x 8 array of tiles that make up a supertile in the specific implementation being discussed. As shown therein, the positive-slope tiles 501 are interposed with the negative-slope tiles 502.

We have found that because the data structure implies the sign of the slope for each tile, memory can be conserved without loss of image quality. In addition, the rendering process also occurs more rapidly. In the implementation described here, the single bit of slope information saved allows each slope tile to be represented by a single data byte specifying the value of the slope surface at the lower right hand corner of the tile. We have also found that when this is done, the tile merging process is more efficient to perform.

To understand further how a slope tile is encoded, return to FIG. 4D. In step 411, four corner pixel values are first located. Next, in step 412, two planar surface expressions, one for each of the two triangular areas, are calculated from the pixel values. The expression for each planar surface is derived from the values at the three corners of its corresponding triangular area. The difference between each actual pixel value and its respective planar surface is calculated in step 413. In step 414, the difference data is organized in the form of a pair of histograms, one for each triangle. These histograms will generally be a Gaussian (bell) curve, centered around the average difference between the actual pixel and the calculated planar surface.

If the calculated planar surface is an acceptable approximation to the actual pixel data, the width, or standard deviation, of each Gaussian will be small and its average will be close to zero. This is determined, in step 415, by adding the width, or standard deviation, of each of the two histograms to its corresponding average value. These two sums are then compared to a threshold value, Hₜ. If either value is above the threshold, the tile is rejected by the slope detection system, in step 416. The slope detection threshold value, Hₜ, is an input parameter to the process, and depends upon the desired accuracy of the image representation. A more accurate representation will use a lower Hₜ threshold, and thus fail the slope test more often.

Once a tile has been determined to be accurately representable as a pair of slopes, its upper-right corner value is saved in the quadtree. At paint time, the additional three corner values needed to render the two triangles are found by looking up the upper-right corner values of three adjacent tiles. In other words, these additional value are "inherited" by the tile from its adjacent tiles.

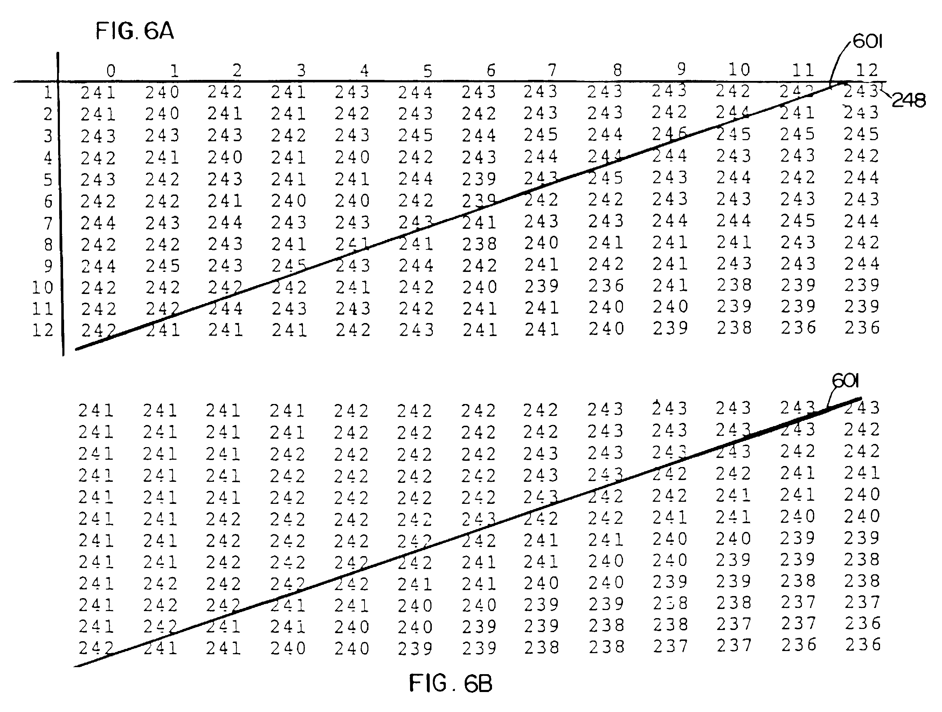

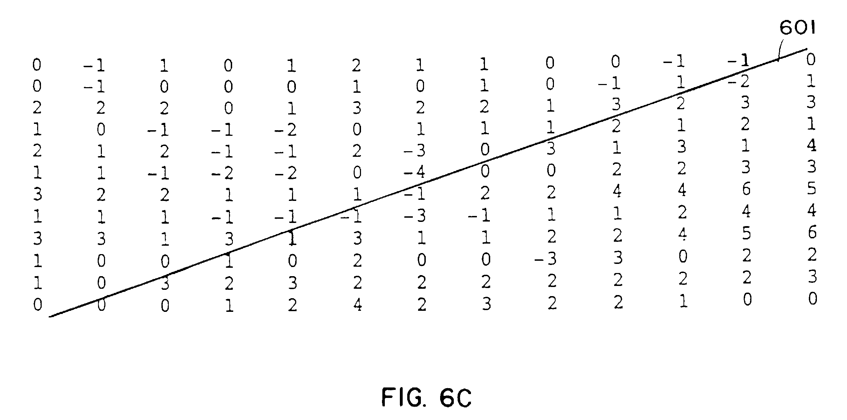

FIGS. 6A, 6B, and 6C show how a slope tile is generated from scanner output data. FIG. 6A shows a scanner output for a 12 x 12 tile. This scanner has an intensity resolution of eight bits per pixel, so that the pixel values range in magnitude from 0 to 255. The thirteenth column on the left side is borrowed from the abutting in an adjacent tile, to serve as a mechanism to insure that the resulting analytic representations line up properly along tile boundaries. The tile is in a position in the supertile array requiring a fit to a positive slope. The diagonal center line 601 drawn through the tile delineates the upper-left and lower-right portions.

FIG. 6B shows the expected values for two planar surfaces fit to the pixel data of FIG. 6A. For example, the upper triangle is a planar surface running through the three values (1,1,240), (1,11,242), and (11,1,243). Similarly, the lower triangle is a planar surface running through (1,12,241), (12,1,243) and (12,12,236).

FIG. 6C is the array of actual pixel values minus calculated planar surface values, or difference values. For the illustrated example, the average difference and standard deviation of the difference values for the two triangles are as follows:

| | (avg. diff.) | (std. dev.) | (sum) |
|---|---|---|---|
| Upper left | 0.51 | 1.11 | 2.62 |
| Lower right | 1.76 | 1.30 | 3.06 |

Since both sums are less than 3.2, the value used for Hₜ in the implementation being discussed, the tile can be represented by a slope expression. The code generated for this tile is simply GRAY 243, i.e., the value of the slope expression at the upper-right hand corner of the tile.

FIG. 4E shows the edge detection process in greater detail. In addition to the pixel values actually contained in the specific tile submitted for processing, pixel values from adjacent tiles are also used. For example, in the 12 x 12 tile implementation, the process borrows a column of pixels along each side, and rows of pixels along the top and bottom. Thus, it actually operates on a 16 x 16 array of pixels. This insures overlap between adjacent edge tiles, making the representation more accurate, and leading to increased consistency in the identification of edges that traverse multiple tiles.

As shown in step 420, the edge detection process first examines all pixel values in the tile to find a maximum and minimum value. In step 421, the difference between these values is determined and compared to the same threshold, sₜ, as was used during sequence determination (FIG. 4C). Tiles with difference values below the threshold are rejected, in step 422.

Otherwise, in step 423, the edge detection process then generates a value histogram of all pixel values in the tile.

The value histogram is used, in step 424, to determine one or more "posterization" thresholds used to further delineate the edges in the tile, by hard-limiting the pixel values encompassed by the tile to one of only a few grey levels. The value histogram is compared with one or more characteristic value histograms, or templates, which indicate the presence of an edge. If a particular histogram template is not sufficiently similar to the value histogram, the process iterates back through step 425, to step 423, where another value histogram is constructed. Thus, various different histograms may be constructed and examined in an iterative fashion by continuing to execute steps 423, 424, and 425 until a match is found or all possibilities are considered.

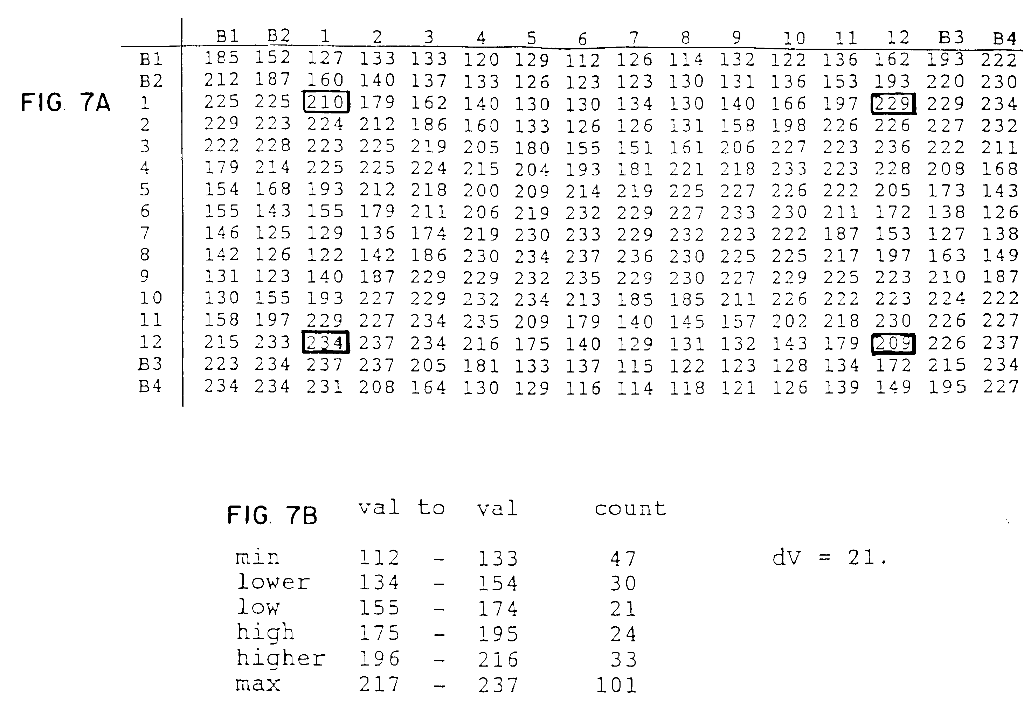

Each value histogram template compared to a pixel value histogram in steps 423 and 424 is associated with one or more threshold values to be used for posterization of the pixel data in step 426. Histograms having different numbers of bins and bins of different sizes, and thus different relative values of posterization thresholds, are tried until it is determined that there is a sufficient match. . For example, one histogram test performed in steps 423 and 424 is to determine if 80% or more of the pixel values fall into only two histogram bins. If this is true, then the tile can be represented as a single, binary edge, that is, an edge separating two pixel value regions. The proper posterization threshold is thus located between the two bins. Another exemplary histogram test will be described shortly, in connection with the edge tile example of FIGS. 7A through 7C.

In the event that a tiles passes the maximum / minimum different test in step 421, but its value histogram still cannot be classified as a particular known type in step 424, the tile is rejected as an edge tile.

However, if the tile has been classified as a particular known type, the corresponding threshold values are used for posterization of the tile, in step 426. To posterize a monochrome tile with two thresholds, for example, all pixels having a value above the higher threshold are given a value corresponding to black, and all pixels below the lower threshold are assigned a value corresponding to white. All pixels with values between the pair of thresholds are assigned a single value of grey. The effect of this process is to cause any edges in the sub-area of the source image encompassed by the tile to stand out in sharp contrast.

After the edges are delineated, the next step is to identify an analytic expression for each edge in the tile. In step 428, the edge detection process continues by traversing the outermost pixels of the tile, i.e., the pixels positioned along the perimeter of the posterized tile. Adjacent pixels having different values are noted. These are labeled as a possible edge entry/exit point, and the coordinates of all such possible entry/exit points are recorded in step 428. Once the entire circumference of the tile has been traversed, a complete list of all of the points at which edges may enter or exit the tile is known. If entry and exit points cannot be found, the tile is rejected.

In step 429, the edge entry/exit points are paired, to find each entry point and a corresponding exit point for each edge. In particular, starting at the first such point in the list, dubbed an entry point, the determination of an analytic expression for each edge continues by following the path of the transitions in pixel value, i.e., by "following" each edge until the corresponding exit point on the periphery is reached. By repeating this process for each point on the entry/exit point list, a list of entry and exit points, as well as a list of points along the edge between the entry and exit points, is thus determined for each edge.

The system now attempts to derive an analytic description for each edge, as identified by the list of points along the edge between the entry and exit points. In step 430, the edge is first compared with a single line segment connecting its endpoints. By means of an area comparison technique, this approximation is evaluated, and accepted or rejected. In other words, the expression for a straight line between the entry and exit points is first determined. The difference between the area under the interpolated straight line and the area under the line defined by the actual pixels along the edge is then calculated. If this difference is above a threshold value, a straight line approximation is not accepted.

If the difference between the line and the actual edge is sufficiently small, control passes to step 431, which generates a representation of the edge as a line segment.

In step 432, if the edge is rejected by the straight line comparison, it is then compared with a parabolic segment connecting the entry and exit points of the edge. Parabolic segments are preferred, since they include circular arcs as well as other types of curves. If this representation is sufficiently accurate, step 433 records the edge by entering the analytic expression for the parabolic segment in the corresponding portion of the tile.

Similarly, in step 434, if a parabolic line segment representation is not sufficiently accurate, the edge is tested to see if it can be represented as a pair of line segments which meet at an internal, or "turning" point located within the tile. If this is possible, step 435 generates the proper representation in the form of two line segments.

If all else fails, in step 436, the edge is represented by a compacted list of a set of straight line segments between the points along the edge. The list is made as long as is needed to represent the edge to the desired accuracy, up to a limit determined by the number of pixels along the edge.

Step 437 determines if all edges within the tile have been analytically represented, and if this is not the case, control returns to step 430, where the next edge is processed.

When all edges in the tile have been fully represented by an analytic expression, information regarding the type of each edge and its start and end coordinates is stored in quadtree element corresponding to the current tile. The grey values used for each posterization threshold are also stored, , so that they are available when the tile is rendered.

FIGS. 7A through 7C show how a representative edge tile can be generated from scanner output data in one implementation of the invention. FIG. 7A is an array of pixel values encompassed by an exemplary 12 x 12 tile are shown, together with pixel values from the two nearest columns and rows on each side. The corner pixels of the current tile are indicated by the boxes.

The results of one value histogram, in step 423 (FIG. 4E) are shown in Fig. 7B. The histogram comprises six bins uniformly distributed between the minimum and maximum values in the tile.

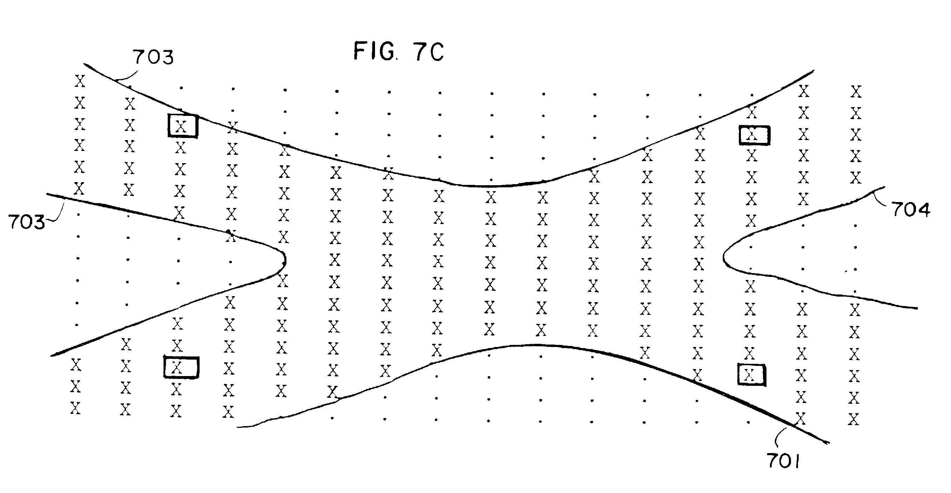

FIG. 7C shows the posterized tile generated in step 426 (FIG. 4E), with a single posterization threshold set to 174, i.e., the middle of the pixel value range in the array of FIG. 7A. Thus, the "dots" in FIG. 7C indicate white pixels, and the "X's" indicate black pixels. The four edges, 701, 702, 703, and 704, indicated by solid lines, are clearly visible from this posterized representation.

The code generated for this tile is
EDGES: 229, 226, 4
121 :: PBB 0:12, 4:9
127 :: CTT 1:7, 4:2
121 :: CLL 1:7, 9:5
152 :: CRR 4:7, 1:5
with "EDGES::" indicating the tile type, " 229" indicating the upper-right hand corner gray value, "226" a gray value which should be used as the background pixel value when rendering the tile, and "4" indicating the number of edges.

"PBB 0:12, 4:9" indicates the bottom edge 701, specified as a pair of line segments meeting at an internal turning point. "PBB" is interpreted as follows. The "P" indicates a par of line segments. The first "B" indicates that the edge entry point is along the bottom of the tile, and the second "B" indicates that the edge exit point is also along the bottom of the tile". "0" and "12" indicate the x-coordinate of the entry and exit points along the bottom edge, and "4:9" indicates the x- and y-coordinates of the internal point. A further understanding of the preferred analytic expression encodings can be had from the picture language glossary at the end of this section.

"CTT 1:7, 4:2" indicates the top edge 702, specified as a parabolic segment, with the associated entry and exit points. "4:2" indicates the internal point, which is on the tangent line for the parabolic segment.

"CLL 1:7, 9:5" and "CRR 4:7, 1:5" specify the left and right side parabolic line segment edges 703 and 704, respectively.

The area inside of and encompassed by the four edges is rendered at the pixel value " 226". Other implementations may render this area as a slope which fits through the color values associated with each edge. The four areas outside of the edges are rendered at the intensities "121, "127", "121", and "152", respectively.

Note that there may be additional encodings used such as grey level normalization, or point list compaction, known in the art. These further reduce the number of bits needed to represent each tile.

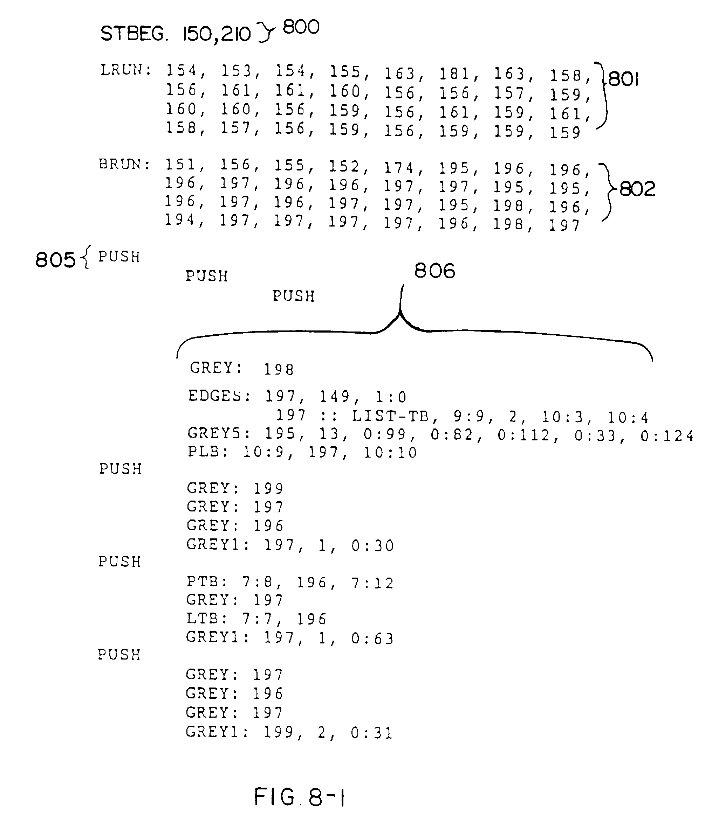

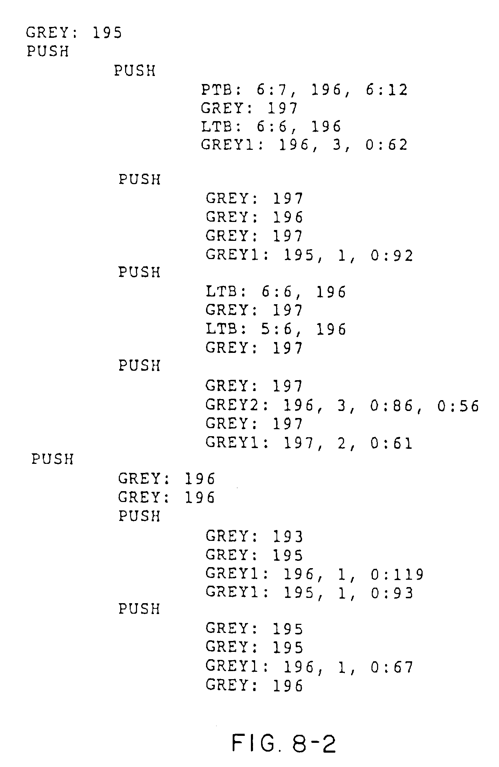

FIG. 8 contains a representation of an exemplary complete supertile as generated by the process of FIGS. 4A-4E. It should be read in conjunction with the following picture language glossary. Generally speaking, STBEG 800 indicates the start of a supertile. LRUN 801 and BRUN 802 are a list of left and bottom upper-right corner pixel values taken from the tiles along the periphery of the supertiles adjacent the left and bottom sides of the current supertile. PUSH, such as indicated at 805, is a signal that the next element of the quadtree is at the next lower level. The corresponding "POP" is implied after four tiles are encountered at the same level. Thus, the first tile descriptor, GREY 198, indicated at 806, is at the fifth level in the supertile.

A further understanding of the exemplary supertile in FIG. 8 can be had from the following glossary.

### PICTURE LANGUAGE GLOSSARY

### STBEG: VAL, LINBYTES

VAL is the grey (or color) value of the upper-right corner of the supertile. LINBYTES is the length in bytes of the supertile description.

### LRUN: v0, v1,..., vn

Left side inheritance initialization values. These are grey (or color) values to be used as the left adjacent tile values by all of the tiles along the left side of this supertile. n = 2^{x}, where x is the maximum permissible quadtree depth.

### BRUN: v0, v1,..., vn

Bottom side inheritance initialization values. These are grey (or color) values to be used as the bottom adjacent tile values by all of the tiles along the bottom side of this supertile. The value of n is calculated as for LRUN.

### PUSH

Go down one level in the quadtree. The matching "POP" function is implied at each level, after all four tiles at that level have been encountered in sequence.

### (Slope and Random Tile Representations)

### GREY: VAL

Indicates a slope tile. VAL is the upper-right corner grey (or color) value. All other corner grey (or color) values needed to render this tile are inherited, by examining the upper-right corner values from adjacent tiles.

### GREY1:VAL, CODE, SUBVAL

equivalent to:
   PUSH
      GREY
      GREY
      GREY
      GREY

VAL is the uppper-right corner grey (or color) value of the tile. CODE is a compaction key. SUBVAL is a list of upper-right corner grey (or color) values for the subtree, in compacted form.

### GREY2: VAL, CODE, SUBVAL0, SUBVAL1

equivalent to:
   PUSH
      GREY
      GREY
      GREY
      RANDOM

Again, VAL is the upper-right corner grey (or color) value of the tile. CODE is a compaction key. SUBVAL0 is a list of upper-right corner grey (or color) values for the subtree one level down, SUBVAL1 is a compacted list of values sub-sampled from the source image at otherpredetermined places in a RANDOM tile.

### GREY5:VAL, CODE, SUBVAL0, ..., SUBVAL4

Equivalent to
   PUSH
      RANDOM
      RANDOM
      RANDOM
      RANDOM

VAL is the upper-right corner grey (or color) value of the tile. CODE is a compaction key. SUBVAL0 is a list of upper-right corner grey (or color) values for the subtree one level down, SUBVAL1,...,SUBVAL4 are lists of grey (or color) values sub-sampled for each of the four tiles in compacted form.

### (Edge Tile Representations)

### EDGES: VAL1, VAL2,ENUM,EVAL0,ETYPE0,EDATA0,....EVALn, ETYPEn,EDATAn

Indicates a tile containing multiple edges. VAL1 is the upper-right corner grey (or color) value. VAL2 is the background grey (or color) value. ENUM is the number of edges. EVAL specifies a grey (or color) value supplied for each edge. ETYPE is the edge type, and EDATA is a string supplying exit, entry, and internal points for each edge.

The possible ETYPEs are as follows below, with abbreviations used as follows:
P - a pair of line segments, with one internal turning point
L - a line edge
C - a parabolic segment edge
B, T, L, R - bottom, top, left, and right
The last two letters of an ETYPE descriptor tell the side from which the edge enters and exits.

### LIST-TB, EN/EX, PNUM, IP1,..IPpnum

Indicates an edge represented by a list of line segment end points. EN/EX are the coordinates of the entry and exit points. PNUM is the number of internal points. IP is the relative internal position of each point.

### (Edge Tile Examples)

### PLB: EN/EX, VAL, IP

Indicates a single edge tile, consisting of a pair of straight-line segments with one internal turning point, which enters through the left side and exits through the bottom side of the tile. EN/EX gives the entry and exit points along the indicated sides of the tile. VAL is the upper-right corner grey (or color) value. IP is the relative position of the internal turning point.

### LTB: EN/EX, VAL

Indicates a single edge tile, consisting of a vector which enters through the top and exits through the bottom of the tile. EN/EX gives the entry and exit points along the indicated sides of the tile. VAL is the upper-right corner grey (or color) value.

Other edge tile types are possible -- the aforementioned three are meant only as examples.

The foregoing description has been limited to a specific embodiment of this invention. It will be apparent, however, that variations and modifications may be made to the invention, with the attainment of some or all of the advantages of the invention. Therefore, it is the object of the appended claims to cover all such variations and modifications as come within the scope of the invention.

## Claims

1. A system for developing an analytic representation from a pixel map representation of a source image, the pixel map including an array of pixel values, the system comprising:
means for arranging the pixel values into a plurality of pixel groups, each pixel group thus being a pixel map representation of a portion of the source image;
means for generating an analytic expression for a pixel group, the analytic expression being a mathematical function that relates each pixel value to its relative spatial position in the pixel group, and thus representing the pixel group as an array of points on a three-dimensional, continously sloped surface;
means for comparing the pixel values in the pixel group to the analytic expression, and thus determining whether the pixel group can be represented, to a predetermined accuraccy, as the continuously sloped, analytic expression; characterised in that said system further comprises
means for determining whether the pixel value group contains an intensity boundary, if the corresponding analytic expression does not represent the pixel values to a predetermined accuraccy, by calculating a difference between a minimum and a maximum pixel value among the pixel values in the pixel group, and by then determining whether that difference exceeds a predetermined threshold value; and
means for generating another analytic expression that represents the pixel group in the form of a two-dimensional mathematical function that fits the spatial coordinates of the intensity boundary, if the difference does exceed the predetermined threshold value.

2. A system as in claim 1 additionally comprising;
means for successively subdividing each pixel group into smaller sub-groups if the means for determining determines that a pixel group cannot be represented as an analytic expression, the subdivision of the pixel groups continuing until the sub-groups can be represented as analytic expressions to a predetermined accuracy, or until a minimum sub-group size is reached.

3. A system as in claim 1 additionally comprising:
means for representing the analytic expressions as elements in a hierarchical data structure, each element of the data structure thus representing the analytic expression for a corresponding portion of the image.

4. A system as in claim 3 wherein the hierarchical data structure is arranged as a simple array data structure above a certain level, with least one level of the data structure being a simple array.

5. A system as in claim 3 additionally comprising:
means for iteratively analyzing the analytic expressions for elements at the same level in the hierarchy, and for determining if they contain the same type of analytic expression, and if so, for merging them into a single expression positioned at a higher level in the hierarchical data structure, until the highest level possible is analyzed.

6. A system as in claim 1 additionally comprising:
means for rendering the image representation by evaluating the analytic expressions.

7. A system as in claim 1 wherein the means for comparing additionally compares the pixel values associated with an element in two groups, to determine if the element can be represented as a pair of three-dimensional continuously sloped surfaces to a predetermined accuracy.

8. A system as in claim 1 wherein the means for generating a representation additionally comprises:
means for representing the element as a sub-set of pixel values from the corresponding pixel group if neither the two-dimensional analytic expression that represents the intensity boundary nor the three-dimensional continuously sloped analytic expression represents the corresponding pixel values to a predetermined accuracy.

9. A system as in claim 1 wherein the means for generating another analytic expression that represents the pixel group in the form of a two-dimensional mathematical function additionally comprises:
means for interpolating the spatial coordinates of the intensity boundary to calculate parameters of a straight line representation.

10. A system as in claim 1 wherein the means for generating another analytic expression that represents the pixel group in the form of a two-dimensional mathematical function representation additionally comprises:
means for interpolating the spatial coordinates of the intensity boundary to calculate parameters of a pair of lines that meet at a point internal to the corresponding portion of source image.

11. A system as in claim 1 wherein the means for generating another analytic expression that represents the pixel group in the form of a two-dimensional mathematical function additionally comprises:
means for interpolating the spatial coordinates of the intensity boundary to calculate parameters of a parabolic segment representation.

12. A system as in claim 1 wherein the means for determining whether the pixel value group contains an intensity boundary additionally comprises:
means for producing a posterized element version of the pixel group, the posterized element containing the intensity boundary delineated in sharp contrast;
means for examining the pixel values along the periphery of the posterized element, to indentify the coordinates of peripheral pixel values that indicated entry and exit points of each intensity boundary of the posterized element;
means for pairing the entry and exit points; and
means for generating a list of the coordinates of pixels along the intensity boundary by starting at each entry point, following the intensity boundary, recording the local of each pixel on the boundary, and continuing until the coordinates of the exit point are reached.

## Patentansprüche

1. System zum Entwickeln einer analytischen Darstellung aus einer Pixelkartendarstellung eines Quellenbildes, wobei die Pixelkarte ein Feld von Pixelwerten enthält, umfassend:
eine Einrichtung zum Anordnen der Pixelwerte in einer Mehrzahl von Pixelgruppen, von denen jede Pixelgruppe eine Pixelkartendarstellung eines Abschnitts des Quellenbildes ist;
eine Einrichtung zum Generieren eines analytischen Ausdrucks für eine Pixelgruppe, wobei der analytische Ausdruck eine mathematische Funktion ist, welche jeden Pixelwert in Beziehung setzt zu dessen relativer räumlicher Position innerhalb der Pixelgruppe und dadurch die Pixelgruppe darstellt als ein Feld von Punkten auf einer dreidimensionalen, kontinuierlich geneigten Fläche;
eine Einrichtung zum Vergleichen der Pixelwerte innerhalb der Pixelgruppe mit dem analytischen Ausdruck, um dadurch festzustellen, ob die Pixelgruppe mit einer vorbestimmten Genauigkeit als kontinuierlich geneigter analytischer Ausdruck dargestellt werden kann;
**dadurch gekennzeichnet,**
daß das System weiterhin aufweist:
eine Einrichtung zum Feststellen, ob die Pixelwertgruppe eine Intensitätsgrenze enthält, wenn der entsprechende analytische Ausdruck die Pixelwerte nicht mit einer vorbestimmten Genauigkeit repräsentiert, indem eine Differenz berechnet wird zwischen einem minimalen und einem maximalen Pixelwert unter den Pixelwerten in der Pixelgruppe, und indem dann festgestellt wird, ob die Differenz einen vorbestimmten Schwellenwert übersteigt; und
eine Einrichtung zum Generieren eines weiteren analytischen Ausdrucks, welcher die Pixelgruppe in der Form einer zweidimensionalen mathematischen Funktion repräsentiert, welche zu den räumlichen Koordinaten der Intensitätsgrenze paßt, wenn die Differenz den vorbestimmten Schwellenwert nicht übersteigt.

2. System nach Anspruch 1,
**gekennzeichnet durch:**
eine Einrichtung zum sukzessiven Unterteilen jeder Pixelgnippe in kleinere Untergruppen, wenn die Feststellungs-Einrichtung feststellt, daß eine Pixelgruppe nicht als analytischer Ausdruck repräsentiert werden kann, wobei die Unterteilung von Pixelgruppen solange anhält, bis die Untergruppen als analytische Ausdrücke mit einer vorbestimmten Genauigkeit dargestellt werden können, oder bis eine Minimum-Untergruppengröße erreicht ist.

3. System nach Anspruch 1, zusätzlich umfassend:
eine Einrichtung zum Repräsentieren der analytischen Ausdrücke als Elemente einer hierarchischen Datenstruktur, wobei jedes Element der Datenstruktur den analytischen Ausdruck für einen entsprechenden Abschnitt des Bildes repräsentiert.

4. System nach Anspruch 3, bei dem die hierarchische Datenstruktur als einfaches Datenstrukturfeld oberhalb eines gewissen Niveaus angeordnet ist, wobei mindestens ein Niveau der Datenstruktur ein einfaches Feld ist.

5. System nach Anspruch 3, zusätzlich **gekennzeichnet durch:**
eine Einrichtung zum iterativen Analysieren der analytischen Ausdrücke für Elemente desselben Niveaus innerhalb der Hierarchie, und zum Feststellen, ob sie denselben Typ des analytischen Ausdrucks enthalten, und, falls ja, sie zu einem einzigen Ausdruck zu verschmelzen, der auf einem höheren Niveau in der hierarchischen Datenstruktur angesiedelt ist, bis das höchstmögliche Niveau analysiert ist.

6. System nach Anspruch 1, zusätzlich umfassend:
eine Einrichtung zur Wiedergabe der Bilddarstellung durch Auswerten der analytischen Ausdrücke.

7. System nach Anspruch 1, bei dem die Einrichtung zum Vergleichen zusätzlich die zu einem Element in zwei Gruppen gehörigen Pixelwerte vergleicht, um festzustellen, ob das Element als ein Paar dreidimensionaler kontinuierlich geneigter Flächen mit einer vorbestimmten Genauigkeit dargestellt werden kann.

8. System nach Anspruch 1, bei dem die Einrichtung zum Generieren einer Darstellung zusätzlich aufweist:
eine Einrichtung zum Repräsentieren des Elements als Untersatz von Pixelwerten aus der entsprechenden Pixelgruppe, wenn weder der zweidimensionale analytische Ausdruck, der die Intensitätsgrenze repräsentiert, noch der dreidimensionale kontinuierlich geneigte analytische Ausdruck die entsprechenden Pixelwerte mit einer vorbestimmten Genauigkeit repräsentiert.

9. System nach Anspruch 1, bei dem die Einrichtung zum Generieren eines weiteren analytischen Ausdrucks, der die Pixelgnippe in der Form einer zweidimensionalen mathematischen Funktion repräsentiert, zusätzlich aufweist:
eine Einrichtung zum Interpolieren der räumlichen Koordinaten der Intensitätgrenze, um Parameter einer Geradendarstellung zu berechnen.

10. System nach Anspruch 1, bei dem die Einrichtung zum Generieren eines weiteren analytischen Ausdrucks, der die Pixelgnippe in der Form einer zweidimensionalen mathematischen Funktionsdarstellung repräsentiert, zusätzlich aufweist:
eine Einrichtung zum Interpolieren der räumlichen Koordinaten der Intensitätsgrenze, um Parameter eines Paares von Linien zu berechnen, die sich an einem Punkt im Inneren des entsprechenden Abschnitts des Quellenbildes treffen.

11. System nach Anspruch 1, bei dem die Einrichtung zum Generieren eines weiteren analytischen Ausdrucks, der die Pixelgruppe in der Form einer zweidimensionalen mathematischen Funktion repräsentiert, zusätzlich aufweist:
eine Einrichtung zum Interpolieren der räumlichen Koordinaten der Intensitätsgrenze, um Parameter einer parabolischen Segmentdarstellung zu berechnen.

12. System nach Anspruch 1, bei dem die Einrichtung zum Feststellen, ob die Pixelwertgruppe eine Intensitätsgrenze enthält, zusätzlich aufweist:
eine Einrichtung zum Erzeugen einer Poster-Element-Version der Pixelgruppe, wobei das Poster-Element die Intensitätsgrenze in scharfem Kontrast ausgezogen enthält;
eine Einrichtung zum Untersuchen der Pixel-Werte entlang der Peripherie des Poster-Elements, um die Koordinaten der peripheren Pixelwerte zu identifizieren, die Eintritts- und Austrittspunkte jeder Intensitätsgrenze des Poster-Elements angegeben haben;
eine Einrichtung zur Paarbildung von Eintritts- und Austrittspunkten; und
eine Einrichtung zum Generieren einer Liste der Koordinaten von Pixeln entlang der Intensitätsgrenze, indem bei jedem Startpunkt begonnen wird, der Intensitätsgrenze gefolgt wird, der Ort jedes Pixels an der Grenze aufgezeichnet wird, und so lange fortgefahren wird, bis die Koordinaten des Austrittspunkts erreicht sind.

## Revendications

1. Système de développement d'une représentation analytique à partir d'une représentation en mappe de pixels d'une image source, la mappe de pixels englobant une matrice de valeurs de pixels, le système comprenant :
des moyens pour grouper les valeurs de pixels en une pluralité de groupes de pixels, chaque groupe de pixels étant ainsi une représentation en nappe de pixels d'une partie de l'image source ;
des moyens pour générer une expression analytique pour un groupe de pixels, l'expression analytique étant une fonction mathématique qui relie chaque valeur de pixel à sa position spatiale relative dans le groupe de pixels, et représenter ainsi le groupe de pixels comme une matrice de points sur une surface tridimensionnelle à pente continue ;
des moyens pour comparer les valeurs de pixels dans le groupe de pixels à l'expression analytique, et déterminer ainsi si le groupe de pixels peut être représenté, avec une précision prédéterminée, comme l'expression analytique à pente continue ;
***caractérisé en ce que*** ledit système comprend additionnellement :
des moyens pour déterminer si le groupe de valeurs de pixels contient une limite d'intensité si l'expression analytique correspondante ne représente pas les valeurs de pixels avec une précision prédéterminée, en calculant une différence entre une valeur de pixel minimum et une valeur de pixel maximum parmi toutes les valeurs de pixels dans le groupe de pixels, et en déterminant alors si la différence excède une valeur de seuil prédéterminée ; et
des moyens pour générer une autre expression analytique qui représente le groupe de pixels sous la forme d'une fonction mathématique bidimensionnelle qui correspond aux coordonnées spatiales de la limite d'intensité si la différence excède la valeur de seuil prédéterminée.

2. Système selon la Revendication 1, comprenant additionnellement :
des moyens pour subdiviser successivement chaque groupe de pixels en sous-groupes plus petits si les moyens pour déterminer déterminent qu'un groupe de pixels ne peut pas être représenté sous forme d'une expression analytique, la subdivision des groupes de pixels continuant jusqu'à ce que les sous-groupes puissent être représentés sous forme d'expressions analytiques avec une précision prédéterminée, ou jusqu'à ce qu'une taille minimum de sous-groupe soit atteinte.

3. Système selon la Revendication 1, comprenant additionnellement :
des moyens pour représenter les expressions analytiques comme des éléments dans une structure hiérarchique de données, chaque élément de la structure de données représentant ainsi l'expression analytique pour une partie correspondante de l'image.

4. Système selon la Revendication 3, dans lequel la structure hiérarchique de données est organisée sous forme d'une structure de données en simples tableaux au-dessus d'un certain niveau, au moins un niveau de structure de données étant un simple tableau.

5. Système selon la Revendication 3, comprenant additionnellement :
des moyens pour analyser de manière itérative les expressions analytiques d'éléments au même niveau de hiérarchie et pour déterminer s'ils contiennent le même type d'expression analytique, et si c'est le cas, pour les fusionner en une expression unique positionnée à un niveau supérieur dans la structure hiérarchique de données, jusqu'à ce que le plus haut niveau possible soit analysé.

6. Système selon la Revendication 1, comprenant additionnellement :
des moyens pour restituer la représentation de l'image par évaluation des expressions analytiques.

7. Système selon la Revendication 1, dans lequel les moyens pour comparer comparent additionnellement les valeurs de pixels associées à un élément dans deux groupes, pour déterminer si l'élément peut être représenté sous forme de deux surfaces tridimensionnelles à pente continue avec une précision prédéterminée.

8. Système selon la Revendication 1 dans lequel les moyens pour générer une représentation comprennent additionnellement :
des moyens pour représenter l'élément comme un sous-ensemble de valeurs de pixels du groupe de pixels correspondant si ni l'expression analytique bidimensionnelle qui représente la limite d'intensité, ni l'expression analytique tridimensionnelle à pente continue ne représentent les valeurs de pixels correspondantes avec une précision prédéterminée.

9. Système selon la revendication 1 dans lequel les moyens pour générer une autre expression analytique qui représente le groupe de pixels sous forme d'une fonction mathématique bidimensionnelle comprennent additionnellement :
des moyens pour interpoler les coordonnées spatiales de la limite d'intensité pour calculer les paramètres d'une représentation linéaire.

10. Système selon la Revendication 1, dans lequel les moyens pour générer une autre expression analytique qui représente le groupe de pixels sous la forme d'une représentation par une fonction mathématique bidimensionnelle comprennent additionnellement :
des moyens pour interpoler les coordonnées spatiales de la limite d'intensité pour calculer les paramètres de deux lignes qui se rencontrent en un point intérieur à la partie correspondante de l'image source.

11. Système selon la Revendication 1, dans lequel les moyens pour générer une autre expression analytique qui représente le groupe de pixels sous la forme d'une fonction mathématique bidimensionnelle comprennent additionnellement :
des moyens pour interpoler les coordonnées spatiales de la limite d'intensité pour calculer les paramètres d'une représentation en segment parabolique.

12. Système selon la Revendication 1, dans lequel les moyens pour déterminer si le groupe de valeurs de pixels contient une limite d'intensité comprennent additionnellement ;
des moyens pour produire une version élément sous-quantifié ("posterized") du groupe de pixels, l'élément sous-quantifié contenant la limite d'intensité tracée à fort contraste ;
des moyens pour examiner les valeurs de pixels le long de la périphérie de l'élément sous-quantifié, afin d'identifier les coordonnées des valeurs de pixels périphériques qui indiquaient des points d'entrée et de sortie de chaque limite d'intensité de l'élément sous-quantifié ;
des moyens pour apparier les points d'entrée et de sortie ; et
des moyens pour générer une liste des coordonnées des pixels le long de la limite d'intensité en démarrant à chaque point d'entrée, en suivant la limite d'intensité, en enregistrant l'emplacement de chaque pixel sur la limite, et en continuant jusqu'à ce que les coordonnées du point de sortie soient atteintes.
